# FASCICULE DE BREVET EUROPEEN

(11) **EP 1 939 115 B1**
(45) Date de publication et mention de la délivrance du brevet: **26.05.2010**
(21) Numéro de dépôt: 08006670.7
(22) Date de dépôt: 05.08.2005
(51) Int. Cl.: B65G 11/20, B65G 69/16, B01J 8/00, B65G 11/06, B01J 8/06

(54) **Dispositif de chargement d'une enceinte avec des particules solides et procédé utilisant ce dispositif**
Ladevorrichtung eines Behälters mit Festteilchen und Verfahren, bei dem diese Vorrichtung zum Einsatz kommt
Device for loading an enclosure with solid particles and method using this device

(30) Priorité: 13.08.2004 FR 0408875
(43) Date de publication de la demande: 02.07.2008
(62) Demande divisionnaire de: 05796259.9
(73) Titulaire: TOTAL RAFFINAGE MARKETING, 92800 Puteaux (FR)
(72) Inventeur: Patureaux, Thierry, 76290 Fontaine la Mallet (FR); Dromard, Nicolas, 76600 Le Havre (FR); Cottard, Bernard, 76430 Saint Romain de Colbosc (FR)
(74) Mandataire: Largeau, Béatrice

(56) Documents cités:
- EP-A- 0 548 999
- EP-A- 0 644 137
- EP-A- 1 283 070
- WO-A-2004/028679
- US-B1- 6 467 513

## Description

La présente invention concerne un dispositif et un procédé pour le chargement d'une enceinte, notamment une enceinte de grande taille dont la hauteur peut atteindre plusieurs dizaines de mètres, avec des particules solides dont il est nécessaire de conserver l'intégrité physique.

Le dispositif et le procédé selon l'invention s'appliquent plus particulièrement au chargement de réacteurs à lit fixe, de type chimique ou électrochimique, pétrolier ou pétrochimique, avec des particules solides qui peuvent se présenter sous forme de billes, de grains, de cylindres, de pastilles, de bâtonnets ou sous toute autre forme, mais qui sont de dimensions relativement faibles. Les particules solides sont en particulier des particules solides assez fragiles supportant mal une chute libre d'une hauteur de plusieurs mètres.

L'invention sera décrite ci-après pour des billes inertes, généralement en matériau céramique, chargées dans les réacteurs chimiques à lit catalytique fixe. La Demanderesse n'entend toutefois pas se limiter à cette application particulière car le dispositif et le procédé selon l'invention peuvent servir à l'introduction de tout autre type de matériau particulaire dans une enceinte.

On sait que de nombreux réacteurs chimiques de grandes dimensions, par exemple d'une hauteur de 5 à 30 mètres et d'un diamètre d'environ 3 à 6 mètres, comportent en fond de capacité, au-dessous du lit de catalyseur, une couche de billes inertes, par exemple à forte concentration en alumine, de dimensions supérieures à celles des grains de catalyseur, de manière à éviter que ceux-ci ne soient évacués accidentellement par le collecteur de fond de réacteur.

Ces billes ont un diamètre généralement inférieur à 5 cm et elles forment à la base du réacteur - ou en tout autre endroit de celui-ci, par exemple sur le plateau support de lit dans le cas d'un réacteur à double lit catalytique - un lit dont l'épaisseur peut atteindre plus de deux mètres.

Lors du chargement de ces billes, il est essentiel qu'elles soient déposées intactes au fond du réacteur ou sur le plateau support de lit, car si elles se brisent en petits fragments, elles risquent d'obturer le collecteur en sortie du réacteur ou le plateau support, provoquant ainsi une différence de pression entre l'entrée et la sortie de celui-ci, extrêmement préjudiciable au rendement du réacteur et donc in *fine* à l'exploitant.

Plusieurs procédés de chargement de réacteurs avec de telles billes relativement fragiles sont connus.

Le chargement par des sacs ou des seaux remplis de billes, introduits individuellement dans le réacteur, puis vidés par un opérateur au fond de celui-ci, constitue une technique très sûre mais trop lente pour être normalement exploitable.

Une autre technique consiste à charger les billes à l'aide d'une manche souple, d'un diamètre de 10 à 20 cm, fonctionnant en pleine charge, c'est-à-dire remplie de billes d'une extrémité à l'autre. L'opérateur distribue les billes au fond du réacteur en réglant manuellement le diamètre d'ouverture de l'extrémité inférieure de la manche tout en déplaçant celle-ci dans le réacteur. Cette méthode qui ne permet pas de garantir un taux de réussite du chargement proche des 100 % de billes intactes, présente aussi un risque d'accident important pour l'opérateur. En effet, en cas de mauvaise manipulation du système d'ouverture ou en cas de déchirure ou de décrochage de la manche souple qui supporte une charge importante, celle-ci peut tomber ou se vider totalement et brusquement, ce qui entraîne non seulement la casse des billes mais présente un risque considérable pour la sécurité de l'opérateur.

Le document US 6,467,513 B1 décrit un dispositif pour introduire des grains de catalyseur dans les tubes verticaux d'un réacteur, le dispositif étant conforme au préambule de la revendication 1.

La Demanderesse a proposé récemment, dans sa demande de brevet FR 2 829 107, une manche semi-rigide sinueuse ou hélicoïdale dans laquelle les billes descendent en roulant sur la face intérieure de la manche, la vitesse de descente et donc l'énergie cinétique en bout de course pouvant être réglée via l'inclinaison de la pente. Le dispositif décrit dans cette demande est tout à fait satisfaisant tant du point de vue de la vitesse de chargement que de la qualité de remplissage, mais il a l'inconvénient de présenter plusieurs problèmes d'encombrement. En effet, la forme sinueuse ou hélicoïdale du dispositif et la relative rigidité du matériau de la manche rendent difficiles son transport ainsi que son installation et démontage à travers le trou d'homme du réacteur.

La Demanderesse s'est fixé pour objectif de proposer un dispositif de chargement d'un réacteur avec des particules solides qui présente les avantages mais pas les inconvénients du dispositif décrit dans FR 2 829 107, autrement dit un dispositif permettant d'introduire au fond d'une enceinte, avec un débit élevé, des particules relativement fragiles sans les casser, et présentant un encombrement spatial faible, équivalent à celui d'une manche droite telle que décrite ci-dessus.

La présente invention a par conséquent pour objet un dispositif pour introduire des particules solides dans une enceinte, notamment dans un réacteur chimique, selon la revendication 1.

L'invention a également pour objet un procédé de chargement d'une enceinte, notamment d'un réacteur de grande taille, avec des particules solides, selon la revendication 14.

Chacune des rampes hélicoïdales du dispositif de l'invention reçoit les particules solides introduites par l'extrémité supérieure de la manche, arrêtant ou interdisant la chute libre de celles-ci dans la manche en les faisant glisser ou rouler, sous l'effet de la gravité, à une vitesse qui dépend essentiellement de la pente de ladite rampe. Ce dispositif permet ainsi de limiter de manière contrôlée l'énergie cinétique conférée aux particules pendant leur descente dans la manche, en modifiant plusieurs de ses paramètres, tels que la pente de la ou des rampe(s) hélicoïdale(s) et/ou le nombre, la longueur et/ou l'espacement des zones de la manche contenant une telle rampe hélicoïdale, ou encore le pas de la ou des rampe(s) hélicoïdale(s), ces paramètres pouvant être modifiés individuellement ou en combinaison.

L'encombrement spatial du dispositif selon l'invention est déterminé par les dimensions extérieures de la manche souple enveloppant la rampe hélicoïdale, et est par conséquent identique à celui d'une manche souple classique et inférieur à celui d'une manche sinueuse ou hélicoïdale telle que décrite dans FR 2 829 107.

La sécurité de fonctionnement d'un dispositif selon l'invention est considérablement augmentée par rapport à une manche souple classique car il ne fonctionne généralement pas en pleine charge ce qui réduit considérablement le poids de billes ou de particules présentes dans la manche en un instant donné. Par ailleurs, le poids des billes ou particules à charger n'est pas, comme dans le cas de la manche droite souple classique, supporté uniquement par la manche souple, mais principalement par la rampe hélicoïdale qui est fixée à la partie supérieure du réacteur par un mécanisme de suspension indépendant de celui de la manche. Les risques de déchirure ou de décrochage de la manche souple s'en trouvent ainsi considérablement réduits.

L'axe central portant la rampe hélicoïdale peut être en un matériau rigide, par exemple un matériau métallique ou une résine thermoplastique ou thermodurcie, ou en un matériau relativement souple, par exemple une résine plastifiée ou un élastomère, ou encore un matériau composite tel qu'un caoutchouc ou une résine, renforcés par des fibres ou des textiles. Cet axe central peut avoir par exemple la forme d'un tube ou d'une tige pleine.

Les extrémités de l'axe central, ou au moins d'un élément d'axe supportant la rampe hélicoïdale, peuvent également être montées sur des pivots afin de permettre à ces dits axes de tourner librement sous le poids des billes en cours de chargement, permettant ainsi d'accélérer ledit chargement. Une automatisation de la rotation, à l'aide d'un moteur, par exemple pneumatique, peut également être envisagée.

Dans un mode de réalisation préféré du dispositif de l'invention, l'axe central est formé par une pluralité d'éléments d'axe, souples ou rigides, qui sont articulés les uns par rapport aux autres. Cette articulation est particulièrement intéressante lorsque l'axe central est un tube ou une tige relativement rigide car elle augmente alors avantageusement la souplesse globale du dispositif et facilite sa manipulation. La conception d'un axe central en plusieurs éléments articulés les uns par rapport aux autres permet également l'ajustement de la longueur du dispositif en fonction de la hauteur du réacteur, ou le raccourcissement du dispositif au fur et à mesure que ledit réacteur est empli de particules.

La longueur de chacun des éléments articulés est de préférence comprise entre 5 centimètres et 5 mètres suivant le type de réacteur à charger.

Dans un mode de réalisation préféré de l'invention, l'articulation de ces éléments portant la rampe hélicoïdale se fait de préférence par des éléments intermédiaires, ou éléments d'articulation. Ces éléments intermédiaires sont de préférence des éléments souples qui ne font pas obstacle à la chute libre des particules solides à l'intérieur de la manche souple, entre deux rampes hélicoïdales. Les billes ou particules à charger passent ainsi successivement et alternativement dans des zones où elles glissent ou roulent sur une rampe hélicoïdale et dans des zones où elles sont en chute libre.

La longueur des zones de chute libre a une influence sur la vitesse de remplissage. Plus la proportion et la longueur des zones de chute libre sont importantes, plus la vitesse de chargement est élevée. La longueur des zones de chute libre ne doit toutefois pas dépasser une valeur limite supérieure au-delà de laquelle les billes ou particules risquent de se briser ou de s'abîmer. Cette longueur maximale des éléments intermédiaires dépend, bien entendu, de la fragilité des objets à charger. La Demanderesse a constaté qu'une longueur d'éléments intermédiaires comprise entre 5 centimètres et 5 mètres, de préférence entre 0,5 et 3 mètres permettait généralement un remplissage rapide avec un taux de casse très faible des billes.

La proportion globale de l'ensemble des zones de chute libre par rapport à la longueur totale du dispositif selon l'invention est de préférence comprise entre 20 % et 80 %, en particulier entre 40 et 70 %.

On peut citer à titre d'exemples des éléments intermédiaires constitués d'élingues, de cordes, de câbles, de chaînes ou de tubes souples portant à chacune de leurs extrémités des moyens appropriés permettant de les fixer aux éléments d'axe portant une rampe hélicoïdale.

La rampe hélicoïdale peut être en n'importe quel matériau d'une rigidité suffisante pour supporter le poids des billes ou particules. Il peut s'agir d'une feuille en métal, en plastique ou en caoutchouc, ou encore d'un système de type brosse.

Dans un mode de réalisation préféré, la rampe hélicoïdale a une structure en brosse, le nombre et la rigidité des poils formant la brosse étant suffisants pour supporter le poids des particules à introduire lorsque le débit de chargement est maximal. Les poils peuvent être insérés dans un élément approprié, susceptible d'être collé, soudé ou fixé d'une autre manière sur l'axe central.

Dans un mode de réalisation particulièrement préféré, la rampe hélicoïdale est une brosse formée par sertissage de poils en résine dans un profilé en forme de U, lequel profilé est ensuite soudé sur un axe central métallique, de préférence un tube métallique.

On peut également envisager une rampe hélicoïdale de type brosse dont les poils sont pris entre deux tiges enroulées l'une par rapport à l'autre, l'hélice formée par les deux tiges enroulées constituant l'axe central d'une structure de type écouvillon.

La rampe hélicoïdale du dispositif selon la présente invention est de préférence une hélice simple, mais on peut également envisager des hélices doubles ou multiples. Le pas de vis, qui détermine la pente de la rampe et par conséquent la vitesse de roulement ou de glissement des particules, est de préférence compris entre 5 et 100 cm, de préférence entre 15 et 80 cm.

Pour que la rampe puisse amortir la chute des particules et ralentir efficacement la descente de celles-ci dans la manche, il est essentiel que les particules ne puissent pas tomber par-dessus le bord extérieur de la rampe hélicoïdale. Pour cela, le bord extérieur de celle-ci est de préférence en contact avec la manche souple. Lorsque les particules ont une taille relativement importante, par exemple de l'ordre de quelques centimètres, on peut tolérer un certain écart entre le bord extérieur et la manche mais, comme il a déjà été indiqué, cette distance doit être significativement inférieure à la dimension moyenne des particules pour empêcher celles-ci de tomber par-dessus le bord de la rampe.

La manche souple peut être constituée de n'importe quel matériau ayant une résistance mécanique suffisante pour résister à une déchirure pendant le procédé de chargement. Il peut s'agir par exemple d'un matériau textile, de préférence tricoté ou tissé, ou encore d'une feuille en matière plastique, éventuellement renforcée par des fibres ou par un matériau textile. On entend par manche « souple » dans la présente invention non seulement une manche capable de s'aplatir complètement lorsqu'elle est vide, mais également une manche semi-rigide, renforcée par des éléments annulaires rigides, placés à des intervalles réguliers et qui permettent une courbure de la manche mais empêchent l'aplatissement de celle-ci.

Le diamètre intérieur de la manche souple entourant les rampes hélicoïdales et les éléments intermédiaires ne dépasse pas de préférence quelques dizaines de centimètres, et est compris en particulier entre 50 et 400 mm, de préférence entre 100 et 200 mm.

Selon un mode de réalisation préféré de l'invention, le dispositif de chargement est constitué d'un certain nombre de modules, chaque module comportant (i) un segment de manche souple et (ii) un segment intégrant un axe central portant une rampe hélicoïdale, et éventuellement (iii) un élément intermédiaire tel que décrit ci-dessus. Dans un tel module, la longueur d'un segment de manche souple (i) est de préférence sensiblement identique à la longueur du segment comportant un axe central (ii) ou à la longueur globale du segment comportant un axe central (ii) et de l'élément intermédiaire (iii).

Les différents modules sont fixés les uns aux autres à la fois par enchaînement des éléments internes (axe central avec rampe hélicoïdale et élément intermédiaire) et par jonction des extrémités des segments de manche souple. Des moyens de fixation et de jonction appropriés sont connus dans la technique et l'homme du métier n'aura pas de mal à choisir ceux qui conviennent. Les éléments internes peuvent être reliés par exemple par des systèmes d'accrochage appropriés et les segments de manche souple par exemple par des colliers réunissant des brides prévues aux extrémités de chacun des segments de manche souple.

Dans un mode de réalisation préféré du dispositif de la présente invention, la manche souple (ou un segment de manche souple) comporte, sur une partie ou sur la totalité de sa longueur, deux plis droits, diamétralement opposés l'un à l'autre, fermés à leur base par une ligne de couture, chaque pli définissant une bande s'étendant radialement vers l'extérieur de la manche. Les bandes latérales crées ainsi de chaque côté de la manche facilitent la préhension de la manche et servent en outre à l'insertion de moyens de fixation supplémentaires, tels que des oeillets. De tels moyens de fixation supplémentaires ne devraient en effet pas être situés dans la manche souple elle-même car cela augmenterait le risque de déchirure de celle-ci.

Le dispositif de chargement selon la présente invention est utilisé dans un procédé de chargement de particules solides dans des enceintes de grande taille.

Ce procédé comprend
(a) la fixation dudit dispositif par son extrémité supérieure au niveau d'une ouverture (trou d'homme) dans la partie supérieure de l'enceinte, la rampe hélicoïdale étant fixée à la partie supérieure de l'enceinte par un mécanisme de suspension indépendant de celui de la manche,
(b) l'introduction des particules solides par l'extrémité supérieure dudit dispositif.

L'enceinte est de préférence un réacteur, généralement un réacteur cylindrique d'une hauteur comprise entre 15 et 30 mètres et d'un diamètre compris entre 3 et 4 mètres. Pour le chargement d'un tel réacteur, il est nécessaire qu'un opérateur se trouve au fond du réacteur à l'extrémité inférieure du dispositif de chargement, afin de répartir les particules sortant par l'extrémité inférieure dudit dispositif sur toute la surface du fond de l'enceinte ou du front de chargement.

Le réacteur peut toutefois être également un réacteur multi-tubes constitué d'une pluralité de tubes verticaux ayant chacun un diamètre similaire. Dans un mode de réalisation préféré du procédé de chargement d'un tel réacteur, le dispositif de remplissage est utilisé sans la manche souple entourant les éléments internes (axe central avec rampe hélicoïdale et élément intermédiaire), autrement dit les rampes hélicoïdales fixées sur et enroulées autour d'un axe central, ainsi que les éléments intermédiaires, sont introduits directement dans les tubes du réacteurs dont les parois remplissent alors la fonction de la manche souple, absente dans ce mode de réalisation, consistant à empêcher les billes ou particules de tomber par-dessus le bord extérieur de la rampe hélicoïdale. La largeur de la rampe hélicoïdale sera de préférence choisie de manière à ce que la distance entre le bord extérieur de la rampe et la paroi du réacteur soit inférieure à la dimension des particules solides à introduire.

L'invention est maintenant décrite en référence aux dessins annexés, non limitatifs, dans lesquels :
- la figure 1 est une vue en perspective d'un tronçon d'une rampe hélicoïdale d'un dispositif selon l'invention entourée d'une manche souple représentée en coupe ;
- la figure 2 est une vue schématique d'un mode de réalisation préféré du dispositif selon l'invention avec deux rampes hélicoïdales,
- la figure 3 est une vue en perspective d'un mode de réalisation préféré d'une manche souple utilisée dans le dispositif selon l'invention ;
- la figure 4 est une vue en coupe d'un module d'un dispositif de chargement selon l'invention, et
- la figure 5 est une vue en coupe montrant l'accrochage d'un dispositif selon l'invention dans la partie supérieure de l'enceinte.

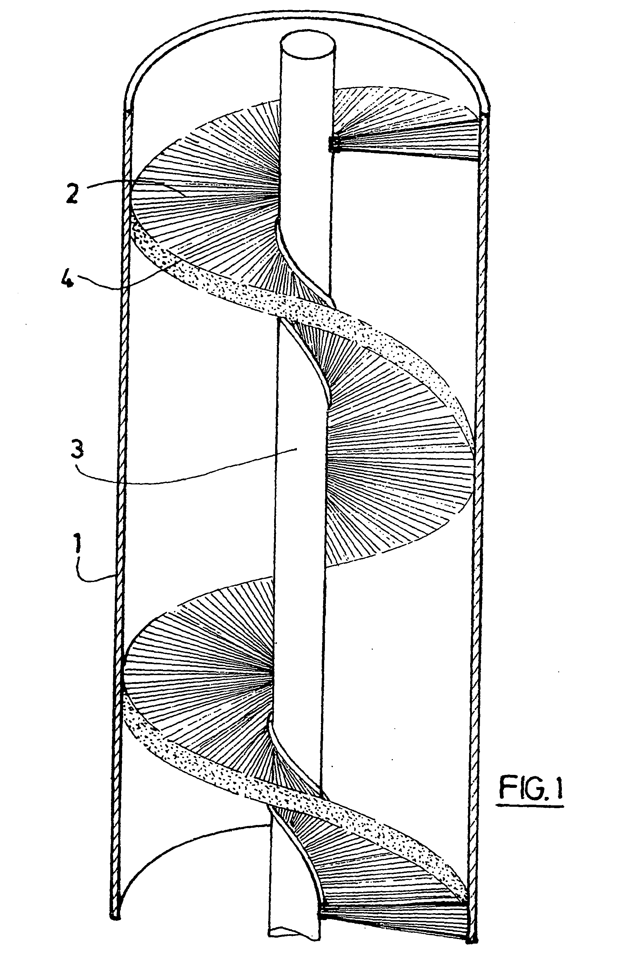

La figure 1 montre un tronçon d'un dispositif selon la présente invention avec une rampe hélicoïdale (2) fixée sur et enroulée autour d'un axe central (3) qui est ici une tige pleine. La rampe hélicoïdale peut être collée ou soudée par sa base sur la tige centrale. Cette structure en colimaçon est enveloppée par une manche souple (1). Cette manche a un diamètre tel que la distance entre le bord extérieur (4) de la rampe hélicoïdale et la manche soit inférieure à la dimension des particules à charger. Le bord extérieur (4) de la rampe (2) peut être en contact de frottement avec la surface interne de la manche souple.

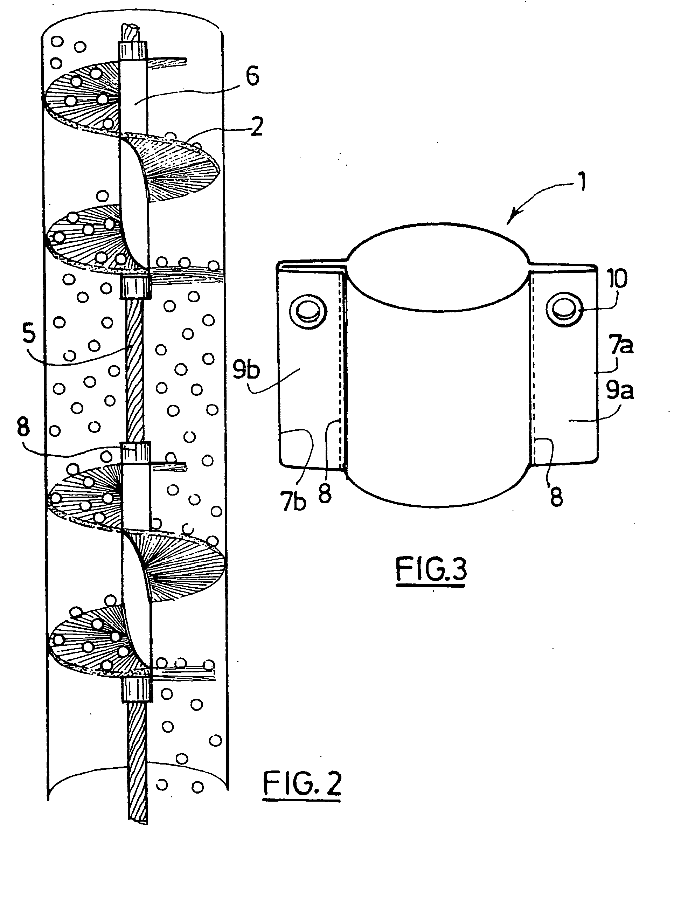

La figure 2 illustre schématiquement l'enchaînement de deux éléments d'axe (6) portant chacun une rampe hélicoïdale (2) et séparés par un élément intermédiaire (5). L'élément intermédiaire (5) est relié aux éléments d'axe (6) par un moyen d'articulation (8), par exemple un système anneau-crochet, permettant le montage et/ou démontage facile et rapide du dispositif. Dans la zone des éléments intermédiaires (5), entre deux rampes hélicoïdales (2), les billes sont en chute libre, ce qui permet d'augmenter le débit de chargement.

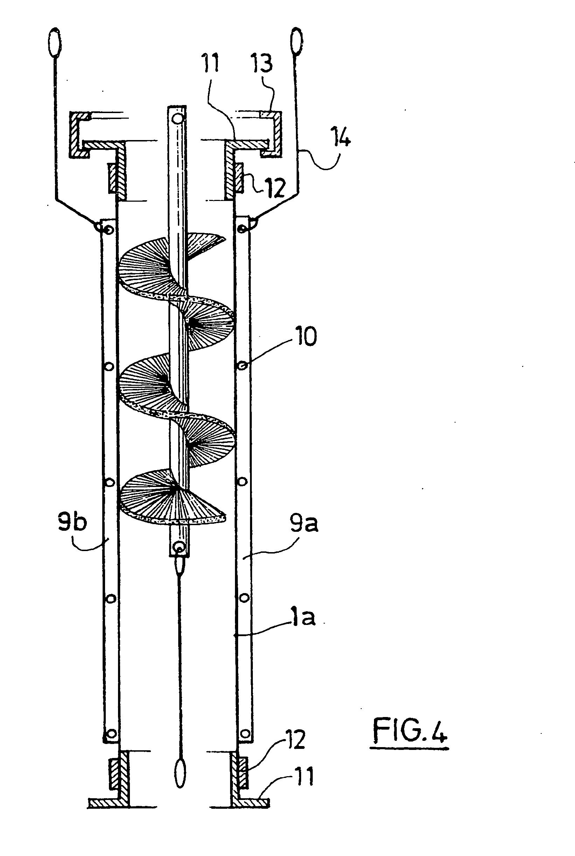

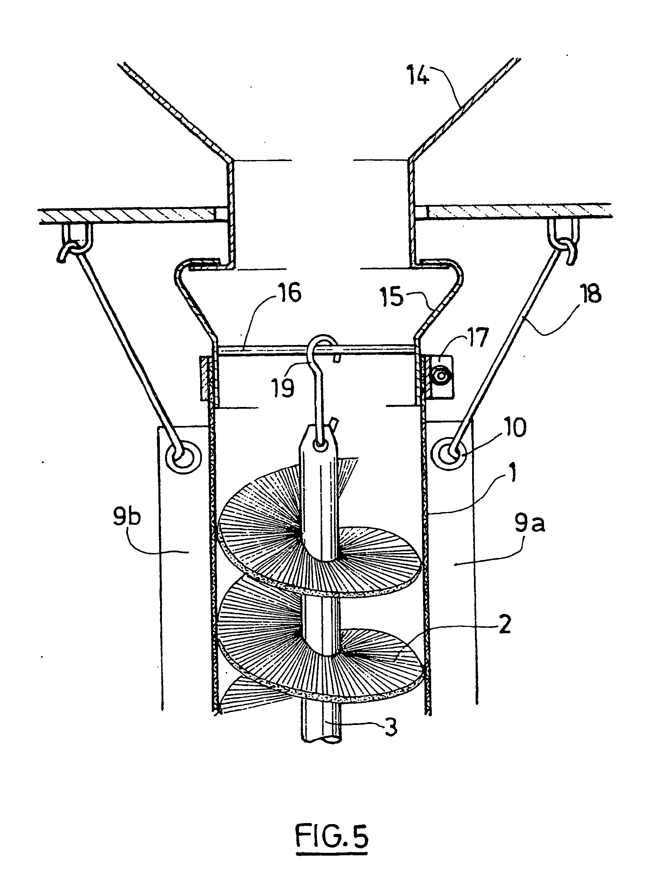

La figure 3 montre un mode de réalisation préféré de la manche souple (1) utilisée dans la présente invention. Dans ce mode de réalisation la manche souple comporte deux plis droits (7a, 7b), diamétralement opposés l'un à l'autre et fermés à leur base par une ligne de couture (8) simple ou multiple. Chaque pli définit une bande latérale (9a, 9b) s'étendant vers l'extérieur de la manche. Un ou plusieurs oeillets (10) peuvent être prévus sur chaque bande latérale. Ces oeillets servent à accrocher la manche souple dans la partie supérieure du réacteur (voir Figure 5) ou à sécuriser la fixation de différents modules du dispositif selon l'invention (voir Figure 4). La largeur des bandes latérales n'est pas déterminante mais est généralement comprise entre 3 et 10 cm. Les bandes latérales peuvent être doublées par un ruban de renforcement (non représenté), collé ou fixé par des lignes de couture supplémentaires.

Sur la figure 4, la manche souple n'est pas fabriquée d'une seule pièce comme sur la figure 2, mais est constituée de plusieurs segments de manche souple (1a) dont un seul est représenté ici. Ce segment comprend deux bandes latérales (9a, 9b) formées par des plis droits comme expliqué sur la figure 3. Une série d'oeillets (10) est disposée le long de chaque bande latérale. Le segment de manche (la) comporte à chacune de ses extrémités une bride (11) fixée au segment de manche (la) par un collier de serrage (12). La bride inférieure d'un premier segment de manche peut être fixée à la bride supérieure du segment de manche suivant au moyen d'un collier (13) de fixation rapide. Le premier et dernier oeillet (10) de chaque bande latérale (9a, 9b) sert à l'accrochage d'un câble de sécurité (14) destiné à empêcher le décrochage du module inférieur en cas de défaillance du système de jonction des segments de manche formé par les brides (11), le collier de serrage (12) et le collier de fixation rapide (13).

Enfin, la figure 5 illustre une possibilité d'accrochage du dispositif de la présente invention dans la partie supérieure du réacteur. Sur cette figure, une trémie (14) est installée dans le trou d'homme d'un réacteur et fixée solidement sur la partie supérieure de celui-ci. Un adaptateur (15) est accroché au niveau du bord inférieur de la trémie (14). Une barre d'accrochage (16) transversale est prévue dans l'adaptateur. La manche souple (1) est fixée par un collier de serrage (17) sur l'adaptateur (15) et accrochée en outre par un système de suspension (18) à la partie supérieure du réacteur. L'axe central (3) portant la rampe hélicoïdale (2) est accroché par un crochet (19) à la barre transversale (16) de l'adaptateur (15).

### Exemple

Deux essais de chargement sont successivement réalisés avec deux manches différentes dont les hauteurs sont identiques au-dessus du sol et égales à 16 mètres.

L'une des manches est conforme à la présente invention et du type décrit en référence aux figures 1 à 4. Elle est constituée d'une gaine cylindrique en coton tissé présentant une épaisseur de 2 mm et un diamètre intérieur de 140 mm. La dite manche est formée de 8 modules de 2 m, chacun de ces modules étant constitué d'une gaine souple et, à l'intérieur de la gaine souple, de deux éléments internes d'égale longueur, c'est-à-dire d'un câble en tant qu'élément intermédiaire et d'un élément d'axe en forme de tube creux de diamètre 35 mm, réalisé en acier courant. La rampe hélicoïdale supportée par le tube creux a une structure en brosse formée par sertissage de poils en résine dans un profilé en forme de U soudé sur l'axe central métallique. Les éléments intermédiaires et les éléments d'axe équipés de rampes hélicoïdales sont reliés de façon classique par leurs extrémités à l'aide de mousquetons.

Le pas de l'hélice de la rampe hélicoïdale est égal à 300 mm, ce qui correspond à une pente de 45°, c'est à dire compris de préférence entre 10° et 80°, et de façon encore plus préférée, entre 20° et 60°.

L'autre manche est une gaine cylindrique souple, d'un diamètre interne de 125 mm, suspendue à la verticale, dans laquelle on laisse tomber les billes en chute libre.

On utilise pour ces essais des billes inertes en alumine fabriquées par la société allemande Vereinigte Füllkörper Fabriken GmbH et commercialisées en France sous l'appellation Duranit. Ces billes ont les diamètres suivants :
- 6,35 mm (1/4 pouce) : essais désignés par A ci-dessous ;
- 12, 67 mm (1/2 pouce) : essais désignés par B ci-dessous ;
- 19,05 mm (3/4 pouce) : essais désignés par C ci-dessous ;

Une plaque métallique simulant le fond du réacteur est disposée à 1 m de l'extrémité inférieure de chaque manche.

Dans les essais d'impacts, la masse des billes utilisées est la suivante :
- essais A , 25 kg
- essais B , 25 kg
- essais C, 10 kg

### Résultats

**Tableau 1 : Nombres de billes cassées ou endommagées avec les deux types de chargements.**

| **Essais** | **Nombre de billes cassées ou endommagées** | **% billes cassées ou endommagées** |
|---|---|---|
| **A** | 0/66000 | 0,00 |
| **B** | 0/8000 | 0,00 |
| **C** | 5/2000 | 0,25 |

**Tableau 2: Comparaison des résultats obtenus avec la manche selon invention et la manche souple connue dans la technique**

| **Essais** | **% billes cassées ou endommagées** | |
|---|---|---|
| | Manche selon l'invention | Manche souple selon l'état de la technique |
| **A** | 0,00 | 10,00 |
| **B** | 0,00 | 35,00 |
| **C** | 0,25 | 22,00 |

On constate qu'alors que, dans tous les essais, le pourcentage des billes intactes est de quasiment 100% avec la manche conforme à l'invention, il varie entre 65 % et 90% avec la manche souple selon l'état de la technique.

Ceci s'explique essentiellement par la différence entre les vitesses d'évacuation des billes hors des deux manches, cette vitesse étant seulement d'environ 3,1 m/s avec la manche droite conforme à l'invention, pour les billes d'un diamètre de 19,05 mm (3/4 pouce), alors qu'elle est de 6,5 m/s avec la manche souple selon l'état de la technique, disposée verticalement.

Ces résultats illustrent clairement l'avantage que présentent le dispositif et le procédé conformes à l'invention pour le chargement de la partie de fond d'un réacteur chimique, ou d'un plateau support de lit, avec des billes inertes.

Comme indiqué ci-dessus, ce dispositif et ce procédé ne sont toutefois pas limités à cette application, mais peuvent également être utilisés pour le chargement ou le déchargement d'une enceinte avec des particules solides, telles des particules de catalyseur, dont il est nécessaire de préserver l'intégrité et les qualités physiques.

## Revendications

1. Dispositif pour introduire des particules solides dans une enceinte, notamment dans un réacteur chimique, comprenant une manche souple (1), de préférence cylindrique, dans laquelle circulent du haut vers le bas lesdites particules, et comprenant en outre, à l'intérieur de la manche, au moins une rampe (2) fixée sur un axe central (3) et ayant une largeur telle que la distance entre le bord extérieur (4) de la rampe (2) et la manche (1) est inférieure à la dimension des particules solides à introduire,
**caractérisé en ce que** ladite au moins une rampe (2) est une rampe hélicoïdale fixée sur et enroulée autour de l'axe central (3) et **en ce que** la manche (1) et la rampe (2) comprennent chacune un mécanisme de suspension (10, 18; 19) à la partie supérieure de l'enceinte, le mécanisme de suspension (19) de la rampe (2) étant indépendant de celui (10, 18) de la manche (1).

2. Dispositif selon la revendication 1, **caractérisé par le fait que** l'axe central (3) est une tige ou un tube souple ou rigide.

3. Dispositif selon la revendication 1, **caractérisé par le fait que** l'axe central (3) est formé par une pluralité d'éléments d'axe (6), souples ou rigides, articulés les uns par rapport aux autres.

4. Dispositif selon la revendication 3, **caractérisé par le fait que** la longueur des éléments d'axe (6) est comprise entre 5 centimètres et 5 mètres, de préférence entre 0,5 et 2 mètres.

5. Dispositif selon la revendication 3 ou 4, **caractérisé par le fait que** les éléments d'axe (6) sont articulés les uns aux autres au moyen d'éléments intermédiaires (5), de préférence d'éléments intermédiaires souples, qui ne font pas obstacle à la chute libre des particules solides, à l'intérieur de la manche, entre deux rampes hélicoïdales (2).

6. Dispositif selon la revendication 5, **caractérisé par le fait que** les éléments intermédiaires (5) sont des élingues, des cordes, des câbles, des chaînes ou des tubes souples.

7. Dispositif selon la revendication 5 ou 6, **caractérisé par le fait que** la longueur des éléments intermédiaires (5) est comprise entre 5 centimètres et 5 mètres, de préférence entre 0,5 et 2 mètres.

8. Dispositif selon l'une des revendications précédentes,
**caractérisé par le fait que** la rampe hélicoïdale (2) a une structure en brosse, le nombre et la rigidité des poils formant la brosse étant suffisants pour supporter le poids des particules à introduire lorsque le débit de chargement est maximal.

9. Dispositif selon l'une quelconque des revendications précédentes, **caractérisé par le fait que** le pas d'hélice de la rampe hélicoïdale (2) est compris entre 5 et 100 cm, de préférence entre 15 et 80 cm.

10. Dispositif selon l'une quelconque des revendications précédentes, **caractérisé par le fait que** la manche souple (1) est en un matériau textile tissé ou tricoté, ou en matière plastique éventuellement renforcé par des fibres ou par un matériau textile.

11. Dispositif selon l'une quelconque des revendications précédentes, **caractérisé par le fait que** la manche souple (1) comprend, sur une partie ou sur la totalité de sa longueur, deux plis droits (7a, 7b), diamétralement opposés l'un à l'autre, fermés à leur base par une ligne de couture (8) et définissant chacun une bande (9a, 9b) s'étendant radialement vers l'extérieur de la manche.

12. Dispositif selon la revendication 11, **caractérisé par le fait que** la bande (9a, 9b) porte ou comporte des moyens de fixation (10) de la manche.

13. Dispositif selon l'une quelconque des revendications précédentes, **caractérisé par le fait que** le diamètre interne de la manche (1) est compris entre 50 mm et 400 mm, de préférence entre 100 mm et 200 mm.

14. Procédé de chargement d'une enceinte, notamment d'un réacteur, avec des particules solides, comprenant la fixation d'un dispositif de chargement selon l'une quelconque des revendications précédentes par son extrémité supérieure au niveau d'une ouverture (14) dans la partie supérieure de l'enceinte, la rampe hélicoïdale (2) étant fixée à la partie supérieure de l'enceinte par le mécanisme de suspension (19) indépendant de celui de la manche (1), et l'introduction des particules solides par l'extrémité supérieure dudit dispositif.

15. Procédé de chargement d'une enceinte selon la revendication 14, **caractérisé par le fait qu'**il comprend en outre la répartition, par un opérateur, des particules sortant par l'extrémité inférieure dudit dispositif de chargement sur toute la surface du fond de l'enceinte ou du front de chargement.

16. Procédé de chargement d'une enceinte selon la revendication 14, **caractérisé par le fait que** l'enceinte à remplir est un réacteur multi-tubes constitué d'une pluralité de tubes verticaux.

## Patentansprüche

1. Vorrichtung zum Einbringen fester Partikel in ein Gefäß, insbesondere in einen chemischen Reaktor, die eine nachgiebige Hülse (1), die vorzugsweise zylindrisch ist, aufweist, in der sich die Teilchen von oben nach unten bewegen, und die zudem im Inneren der Hülse mindestens eine Rampe (2) aufweist, die an einer zentralen Achse (3) befestigt ist und die so eine Breite besitzt, dass der Abstand zwischen der äußeren Kante (4) der Rampe (2) und der Hülse (1) kleiner gegenüber der Abmessung der einzubringenden festen Teilchen ist,
**dadurch gekennzeichnet, dass** die wenigstens eine Rampe (2) eine schraubenförmige Rampe ist, die an der zentralen Achse (3) befestigt und darum herum gewickelt ist, und dadurch, dass die Hülse (1) und die Rampe (2) jeweils einen Aufhängemechanismus (10, 18; 19) an dem Oberteil des Gefäßes aufweisen, wobei der Aufhängemechanismus (19) der Rampe (2) von dem (10, 18) der Hülse (1) unabhängig ist.

2. Vorrichtung gemäß Anspruch 1, **dadurch gekennzeichnet, dass** die zentrale Achse (3) ein Stab oder ein nachgiebiges oder steifes Rohr ist.

3. Vorrichtung gemäß Anspruch 1, **dadurch gekennzeichnet, dass** die zentrale Achse (3) aus einer Vielzahl von Achsenelementen (6) gebildet ist, die nachgiebig oder steif sind, wobei die Einen mit den Anderen gelenkig verbunden sind.

4. Vorrichtung gemäß Anspruch 3, **dadurch gekennzeichnet, dass** die Länge der Achsenelemente (6) zwischen 5 Zentimeter und 5 Meter, vorzugsweise zwischen 0,5 und 2 Metern liegt.

5. Vorrichtung gemäß Anspruch 3 oder 4, **dadurch gekennzeichnet, dass** die Achsenelemente (6) durch Zwischenelemente (5) miteinander verbunden sind, welche vorzugsweise nachgiebige Zwischenelemente sind, die im Inneren der Hülse zwischen zwei schraubenförmigen Rampen (2) kein Hindernis für den freien Fall der festen Partikel darstellen.

6. Vorrichtung gemäß Anspruch 5, **dadurch gekennzeichnet, dass** die Zwischenelemente (5) Schlingen, Stricke, Kabel, Ketten oder nachgiebige Röhren sind.

7. Vorrichtung gemäß Anspruch 5 oder 6, **dadurch gekennzeichnet, dass** die Länge der Zwischenelemente (5) zwischen 5 Zentimeter und 5 Meter, vorzugsweise zwischen 0,5 und 2 Meter liegt.

8. Vorrichtung gemäß einem der vorhergehenden Ansprüche, **dadurch gekennzeichnet, dass** die schraubenförmige Rampe (2) eine Bürstenstruktur hat, wobei die Anzahl und die Steifigkeit der Borsten, die die Bürste bilden, ausreicht, um das Gewicht der einzubringenden Teilchen auch bei der maximalen Durchflussbelastung zu tragen.

9. Vorrichtung gemäß einem der vorhergehenden Ansprüchen, **dadurch gekennzeichnet, dass** die Steigungshöhe der schraubenförmigen Rampe (2) zwischen 5 und 100 cm, vorzugsweise zwischen 15 und 80 cm beträgt.

10. Vorrichtung gemäß einem der vorhergehenden Ansprüche, **dadurch gekennzeichnet, dass** die nachgiebige Hülse (1) aus einem gewebten oder gestrickten Textilmaterial oder aus einem Plastikstoff besteht, der möglicherweise durch Fasern oder durch ein Textilmaterial verstärkt ist.

11. Vorrichtung gemäß einem der vorhergehenden Ansprüche, **dadurch gekennzeichnet, dass** die nachgiebige Hülse (1) auf einem Abschnitt oder über ihre gesamte Länge hinweg zwei aufrechte Falten (7a, 7b) aufweist, die einander diametral gegenüberstehen, welche an ihrer Basis durch eine Nahtlinie (8) geschlossen sind, und jeweils ein Band (9a, 9b) definieren, das sich von der Hülse radial nach außen erstreckt.

12. Vorrichtung gemäß Anspruch 11, **dadurch gekennzeichnet, dass** das Band (9a, 9b) ein Befestigungsmittel (10) für die Hülse trägt oder aufweist.

13. Vorrichtung gemäß einem der vorhergehenden Ansprüche, **dadurch gekennzeichnet, dass** der innere Durchmesser der Hülse (1) zwischen 50 mm und 400 mm, vorzugsweise zwischen 100 mm und 200 mm liegt.

14. Verfahren zum Beladen eines Gefäßes, insbesondere eines Reaktors, mit festen Partikeln, enthaltend:
das Befestigen einer Vorrichtung zum Beladen gemäß einem der vorhergehenden Ansprüche mit ihrem oberen Endstück auf Höhe einer Öffnung (14) in dem Oberteil des Gefäßes, wobei die schraubenförmige Rampe (2) mit dem Aufhängemechanismus (19), der unabhängig von dem der Hülse (1) ist, an dem Oberteil des Gefäßes befestigt ist, und
die Einbringung der festen Teilchen durch das obere Endstück der Vorrichtung.

15. Verfahren zum Beladen eines Gefäßes gemäß Anspruch 14, **dadurch gekennzeichnet, dass** es außerdem das Verteilen der Partikel, die durch das untere Endstück der Vorrichtung zum Beladen austreten, über die gesamte Oberfläche des Bodens des Gefäßes oder die Front der Beladung durch einen Bediener aufweist.

16. Verfahren zum Beladen eines Gefäßes gemäß Anspruch 14, **dadurch gekennzeichnet, dass** das zu befüllende Gefäß ein Multi-Röhrenreaktor ist, der aus einer Mehrzahl von vertikalen Röhren besteht.

## Claims

1. Device for introducing solid particles into a vessel, especially into a chemical reactor, comprising a flexible duct (1), which is preferably cylindrical, said particles flowing through said duct from the top down, and further including, inside the duct, at least one ramp (2) fastened to a central shaft (3) and having a width such that the distance between the outer edge (4) of the ramp (2) and the duct (1) is smaller than the size of the solid particles to be introduced **characterized in that** said at least one ramp (2) is a helical ramp fastened to and wound around the central shaft (3) and **in that** the duct (1) and the ramp (2) each comprise a suspension mechanism (10, 18; 19) in the upper part of the vessel, the suspension mechanism (19) of the ramp (2) being independent of that (10, 18) of the duct (1).

2. Device according to Claim 1, **characterized in that** the central shaft (3) is a flexible or rigid rod or tube.

3. Device according to Claim 1, **characterized in that** the central shaft (3) is formed by a plurality of shaft elements (6), which are flexible or rigid, these being articulated one with respect to another.

4. Device according to Claim 3, **characterized in that** the length of the shaft elements (6) is between 5 centimetres and 5 metres, preferably between 0.5 and 2 metres.

5. Device according to Claim 3 or 4, **characterized in that** the shaft elements (6) are articulated to one another by means of intermediate elements (5), preferably flexible intermediate elements, which do not form an obstacle to the free fall of the solid particles, inside the duct, between two helical ramps (2).

6. Device according to Claim 5, **characterized in that** the intermediate elements (5) are slings, ropes, cables, chains or flexible tubes.

7. Device according to Claim 5 or 6, **characterized in that** the length of the intermediate elements (5) is between 5 centimetres and 5 metres, preferably between 0.5 and 2 metres.

8. Device according to one of the preceding claims, **characterized in that** the helical ramp (2) has a brush-like structure, the number and the rigidity of the bristles that form the brush being sufficient to support the weight of the particles to be introduced when the loading rate is at maximum.

9. Device according to any one of the preceding claims, **characterized in that** the helix pitch of the helical ramp (2) is between 5 and 100 cm, preferably between 15 and 80 cm.

10. Device according to any one of the preceding claims, **characterized in that** the flexible duct (1) is made of a woven or knitted textile material, or made of a plastic optionally reinforced by fibres or by a textile material.

11. Device according to any one of the preceding claims, **characterized in that** the flexible duct (1) includes, over part or all of its length, two straight folds (7a, 7b) which are diametrically opposed to one another and closed at their base by a line of stitches (8), each fold defining a band (9a, 9b) extending radially to the outside of the duct.

12. Device according to Claim 11, **characterized in that** the band (9a, 9b) carries or includes means (10) for fastening the duct.

13. Device according to any one of the preceding claims, **characterized in that** the inside diametre of the duct (1) is between 50 mm and 400 mm, preferably between 100 mm and 200 mm.

14. Method of loading a vessel, especially a reactor, with solid particles, which comprises the fastening of a loading device according to any one of the preceding claims via its upper end at an opening (14) in the upper part of the vessel, the helical ramp (2) being fastened to the upper part of the vessel by the suspension mechanism (19) independent of that of the duct (1), and the introduction of the solid particles via the upper end of said device.

15. Method of loading a vessel according to Claim 14, **characterized in that** it further includes the distributing, by an operator, of the particles exiting via the lower end of said loading device over the entire surface of the bottom of the vessel or of the loading front.

16. Method of loading a vessel according to Claim 14, **characterized in that** the vessel to be filled is a multitube reactor consisting of a plurality of vertical tubes.
